(19) Europäisches Patentamt
European Patent Office
Office européen des brevets

(11) EP 1 332 166 B1

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(21) Anmeldenummer: **01960561.7**

(22) Anmeldetag: **26.07.2001**

(51) Int Cl.:
***C08F 285/00*** (2006.01) ***C08L 51/00*** (2006.01)
***C08F 265/00*** (2006.01) ***C08F 36/00*** (2006.01)

(86) Internationale Anmeldenummer:
**PCT/EP2001/008631**

(87) Internationale Veröffentlichungsnummer:
**WO 2002/020634 (14.03.2002 Gazette 2002/11)**

(54) **PMMA FORMMASSEN MIT VERBESSERTER SCHLAGZÄHIGKEIT**

PMMA MOULDING COMPOUNDS WITH IMPROVED IMPACT RESISTANCE

MASSES A MOULER PMMA A RESILIENCE AMELIOREE

(84) Benannte Vertragsstaaten:
**DE**

(30) Priorität: **04.09.2000 DE 10043868**

(43) Veröffentlichungstag der Anmeldung:
**06.08.2003 Patentblatt 2003/32**

(73) Patentinhaber: **Röhm GmbH**
**64293 Darmstadt (DE)**

(72) Erfinder:
- **SCHULTES, Klaus**
**65197 Wiesbaden (DE)**
- **SÜFKE, Thomas**
**64390 Erzhausen (DE)**
- **MÜLLER, Reiner**
**64584 Biebesheim (DE)**
- **ARNDT, Thomas**
**64750 Lützelbach (DE)**
- **MICHLER, Goerg**
**06179 Langenbogen (DE)**
- **LAATSCH, Joachim**
**52062 Aachen (DE)**

(56) Entgegenhaltungen:
**EP-A- 0 113 924**
**EP-A- 0 512 333**
**EP-A- 0 745 622**
**DE-A- 19 523 465**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 332 166 B1

Printed by Jouve, 75001 PARIS (FR)

## Beschreibung

Gebiet der Erfindung

Die Erfindung betrifft mehrstufige Emulsionspolymerisate, die vorwiegend zur Abmischung mit harten und verhältnismäßig spröden Kunststoffen vorgesehen sind, um deren Zähigkeitseigenschaften zu verbessern. Sie werden häufig als Schlagzähmodifizierungsmittel bezeichnet, obwohl sie auch allein als Formmasse zur Herstellung von schlagzähen Formkörpern, Folien u.dergl. verarbeitet werden können.

Ihr grundsätzlicher Aufbau aus einem harten, nicht-elastomeren Kern, einer elastomeren Zwischenstufe und einer harten, nicht elastomeren Endstufe ist im Oberbegriff des Patentanspruchs angegeben. Es wird angenommen, daß die Polymerisate der Zwischenstufe und der Endstufe schalenförmig um den Kern angeordnet sind.

Stand der Technik

Durch Emulsionspolymerisation hergestellte Schlagzähmodifizierungsmittel aus einem elasomeren Kern und einer harten, nicht-elastomeren Schale sind in großer Zahl aus dem Stand der Technik bekannt.

Gemäß US-P 3 661 994 wurde eine Verbesserung dieser Emulsionspolymerisate dadurch erzielt, daß man als erste Stufe des Emulsionspolymerisats einen harten Kern erzeugt und durch zwei nachfolgende Polymerisationsstufen eine elastomere und eine harte Schale erzeugte. Die elastomere Schale ist mit Divinylmonomeren, wie Divinylbenzol oder Butylendimethacrylat, vernetzt.

Eine weitere Verbesserung der Emulsionspolymerisate wurde gemäß US-P 3 793 402 durch die Verwendung von zwei verschiedenen Vernetzungsmitteln in der elastomeren Phase erreicht. Der eine Vernetzertyp wird als "Polymerisationsvernetzer" bezeichnet und enthält zwei oder mehr polymeriationsfähige Doppelbindungen, die die gleiche Polymerisationsgeschwindigkeit haben wie das einfach ungesättigte Hauptmonomer, das den überwiegenden Teil der elastomeren Phase bildet. Er bewirkt eine innere Vernetzung der elastomeren Phase und ist vollständig verbraucht, wenn die Polymerisation der elastomeren Stufe abgeschlossen ist. Als Beispiele werden Diacrylester und Dimethacrylester von Diolen und Divinyl- und Trivinylbenzol genannt.

Der zweite Vernetzertyp, der gleichzeitig angewendet werden muß, wird als "Pfropfvernetzer" bezeichnet. Er enthält eine polymerisierbare Doppelbindung, deren Polymerisationsgeschwindigkeit mit der des Hauptmonomers übereinstimmt, und eine weitere polymerisierbare Doppelbindung, deren Polymerisationsgeschwindigkeit deutlich geringer ist. Die zuletzt genannten Doppelbindungen bleiben wenigstens teilweise unverändert erhalten, wenn das Hauptmonomer vollständig polymerisiert ist und werden bei der Fortsetzung der Polymerisation in der dritten Stufe allmählich verbraucht. Sie bewirken daher eine Vernetzung der elastomeren zweiten Stufe mit der harten dritten Stufe.

Diese doppelte Vernetzung hat sich als wesentlich erwiesen, um den sogenannten "Weißbruch" zu vermeiden. Darunter wird eine bleibende lokale Weißfärbung eines sonst klar durchsichtigen Formkörpers an Stellen verstanden, an denen er einer starken Dehnung oder Schlageinwirkung ausgesetzt war. Der Weißbruch wird durch die Entstehung von Rissen oder Ablösungen zwischen der kontinuierlichen Hartphase des Formkörpers und der darin in feiner Verteilung eingelagerten Elastomerphase gedeutet. Mit dieser Deutung steht im Einklang, daß durch die Vernetzung der elastomeren mit der harten Phase Ablösungen beider Phasen und damit auch der störende Weißbruch unter Zugbeanspruchung vermieden wird. Wird jedoch der Anteil des Pfropfvernetzers bis zum völligen Verschwinden des Weißbruchs erhöht, so ist eine Verminderung der Zähigkeit, insbesondere der Schlagzähigkeit festzustellen.

Das neuere Patent Nr. EP 0 828 772 "Impact modified (Meth)acrylic Polymers" beansprucht die gleichen Schlagzähmodifier wie in US P 3 793 402. Im ersten Anspruch werden Kern / Schale bzw. Kern / Schale-Teilchen beansprucht, die folgende Zusammensetzung haben:

a. Kern: Poly(meth)acrylat

b. Schale 1 (mehr als 65 Vol.-% von Summe aus Kern und Schale 1): Polymerisat aus 75 - 100 Gew.-% (Meth) acrylaten ($T_g$ deren Homopolymerisate liegt zwischen -75 und 5°C
0 - 25 Gew.-% styrolischen Derivaten

c. Schale 2 (optional): Poly(meth)acrylat wie Kern oder verschieden zu Kernzusammensetzung

d. Kern und Schale 1 enthalten ein Pfropfvernetzungsmittel (Gehalt 0,5 -1 % insgesamt bezogen auf Kern und Schale 1

e. Kein Einbau einer vinylisch ungesättigten Verbindung, die mindestens zwei gleich reaktive Doppelbindungen umfaßt

In den Beispielen wird teilweise neben MMA auch Butylacrylat (bis zu 8 Gew.-%) in Kern und Schale 2 eingebaut, was zwar zu einer weiteren Einstellung des Kerns (und der Schale) führt, aber nicht zu einer signifikanten Erhöhung der Schlagzähigkeit (Erhöhung der Izod Kerbschlagzähigkeit von 7 (1 Gew.-% Butylacrylat) auf max. 8,3 kJ/$m^2$. Auch ist der Brechungsindex des Kerns nicht durch weitere Monomere (wie Styrol) an die Matrix angepaßt.

In dem Artikel "Investigation of the Micromechanical Deformation Behavior of Transparent Toughened Poly (methylmethacrylate) Modified with Core-Shell Particles" in Polymers for Advanced Technologies, 9, 716-20 (1998) diskutieren die Autoren J. Laatsch, G.-M. Kim, G.H. Michler, T. Arndt und T. Süfke das mikromechanaische Verhalten von schlagzähem PMMA anhand von elektronenmikroskopische Aufnahmen. Dabei wird der Gehalt an schlagzähmodifizierenden Gummiteilchen von 4 Vol-% bis 35 Vol-%, bezogen auf die PMMA-Matrix, variiert.

Die Figuren 6 und 7 im Artikel belegen, daß die schlagzähmodifizierenden Teilchen sich lediglich in der Gummiphase verformen, der Kern bleibt unverformt.

Aufgabe

Es sollte nun ein effektiver Modifier gefunden werden, der die Schlagzähigkeit von PMMA-Formmasse im Vergleich zu schlagzähen Formmassen entsprechend des Standes der Technik weiter verbessert. Gleichzeitig dürfen aber Schmelzviskosität, Strangaufweitung, E-Modul und Vicat-Erweichungstemperatur der entsprechenden Formmassen nicht oder nur im geringen Umfang durch den Einsatz der neuen Modifier leiden.

Lösung

Durch eine weichere Einstellung der Kerne in den K/S1/S2-Modifiern kann die Schlagzähigkeit der Formmassen, bei gleichen Einsatzmengen von sz-Modifier in der Formmasse, deutlich gesteigert werden. Diese weichere Einstellung wird durch Einbau von 7 Gew.-% und mehr (bezogen auf Kernmonomere) eines C2-C8-Alkylacrylats in dem Kern erreicht. Die optischen Eigenschaften können durch Einstellung des Brechungsindex im Kern (durch Copolymerisation von Styrol) optional auf gleichem Niveau gehalten werden.

Die erhöhte Schlagzähigkeit der mit dem neuen K/S1/S2-Modifiern ausgerüsteten Formmassen kommt durch die Fähigkeit des Kerns (K) zustande, sich plastisch zu deformieren. Der Kern ist nicht, wie die Schale (S1) gummielastisch, sondern er verformt sich bei starker mechanischer Beanspruchung.

Der K/S1/S2-Schlagzähmodifier ist ein Polymer mit folgender Monomerzusammensetzung:

| | | |
|---|---|---|
| Kern (A): | 53 - 92,3 Gew.-% | Alkylmethacrylat, wobei die Alkylgruppe 1 - 8 Kohlenstoffatome aufweisen kann, |
| | 7 - 35 Gew.-% | Alkylacrylat, wobei die Alkylgruppe 1 - 8 Kohlenstoffatome aufweisen kann, |
| | 0,1 - 2 Gew.-% | Vernetzer oder Vernetzermischung |
| | 0 - 8 Gew.-% | Styrolderivate |

| | | |
|---|---|---|
| Schale (1) | 75 - 99,9 Gew.-% | Alkylacrylat, wobei die Alkylgruppe 1 - 8 Kohlenstoffatome aufweisen kann, |
| | 0 - 25 Gew.-% | Styrolderivate |
| | 0,1 - 2 Gew.-% | Vernetzer |

| | | |
|---|---|---|
| Schale (2) | 80 - 100 Gew.-% | Alkylmethacrylate, wobei die Alkylgruppe 1 - 8 Kohlenstoffatome aufweisen kann, |
| | 0 - 20 Gew.-% | Alkylacrylate, wobei die Alkylgruppe 1 - 8 Kohlenstoffatomen aufweisen kann, |
| | 0,1 - 5 Gew.-% | Regler oder Reglermischung |

Unter den oben erwähnten Alkylmethacrylaten werden Ester der Methacrylsäure verstanden, beispielsweise Methylmethacrylat, Ethylmethacrylat, Propylmethacrylat, Isopropylmethacrylat, n-Butylmethacrylat, Isobutylmethacrylat, tert-Butylmethacrylat, Pentylmethacrylat, Hexylmethacrylat, Heptylmethacrylat, Oktylmethacrylat, Isooctylmethacrylat und Ethylhexylmethacrylat sowie Cycloalkylmethacrylate, wie beispielsweise Cyclohexylmethacrylat.

Unter den oben erwähnten Alkylacrylaten werden Ester der Acrylsäure verstanden, beispielsweise Methylacrylat, Ethylacrylat, Propylacrylat, Isopropylacrylat, n-Butylacrylat, Isobutylacrylat, tert.-Butylacrylat, Pentylacrylat, Hexylacrylat, Heptylacrylat, Octylacrylat, Isooctylacrylat und Ethylhexylacrylat sowie Cycloalkylacrylate, wie beispielsweise

Cyclohexylacrylat.

Als Styrole können Styrol, substituierte Styrole mit einem Alkylsubstituenten in der Seitenkette, wie z.B. α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole, eingesetzt werden.

Als Vernetzer werden beispielsweise folgende Verbindungen eingesetzt.

(a) Difunktionelle (Meth)acrylate
Verbindungen der allgemeinen Formel:

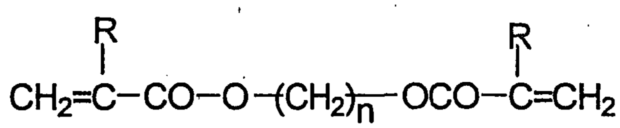

worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols;
Verbindungen der allgemeinen Formel:

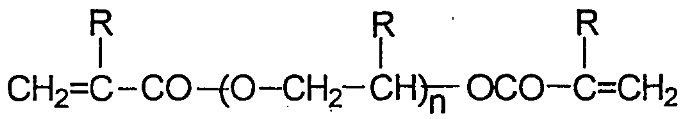

worin R Wasserstoff oder Methyl ist und n eine positive ganze Zahl zwischen 1 und 14 bedeutet, wie z. B. Di(meth) acrylat des Ethylenglycols, Diethylenglycols, Triethylenglycols, Tetraethylenglycols, Dodecaethylenglycols, Tetradecaethylenglycols, Propylenglycols, Dipropylglycols und Tetradecapropylenglycol.
Als weitere Vernetzer können verwendet werden Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.

(b) Tri- oder mehrfachfunktionelle (Meth)acrylate, wie beispielsweise Trimethylolpropantri(meth)acrylate und Pentaerythritoltetra(meth)acrylat.

(c) Als weitere Vernetzer können Allylmethacrylat oder Allylacrylat verwendet werden. Auch Divinylbenzole können verwendet werden.

Die Einstellung der Kettenlängen der Copolymerisate in S2 kann durch Polymerisation des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol oder 2-Ethylhexylthioglycolat, Pentaerythrittetrathioglycolat; wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Beispielhaft für Polymerisationsinitiatoren seien genannt: Azoverbindungen wie 2,2'-Azobis-(isobutyronitril) oder 2,2'-Azobis(2,4-dimethylvaleronitril), Redox-Systeme, wie beispielsweise die Kombination von tertiären Aminen mit Peroxiden oder Natriumdisulfit und Persulfate von Kalium, Natrium oder Ammonium oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele geeigneter Peroxid-Polymerisationsinitiatoren sind Dilauroylperoxid, tert.-Butylperoctoat, tert.-Butylperisononanoat, Dicyclohexylperoxidicarbonat, Dibenzoylperoxid oder 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen,

beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im allgemeinen bei 0,01 bis 2 Gew.-% bezogen auf das Monomerengemisch.

Die Zusammensetzung der Monomeren im Kern wird so gewählt, daß die berechnete Glasübergangstemperatur $T_{gKern}$, berechnet nach der Fox-Gleichung zwischen 30°C und 105°C liegt.

Berechnung der Glasübergangstemperatur nach der Fox-Gleichung.

Näherungsweise kann man die Glasübergangstemperatur von Copolymeren aus der Glasübergangstemperatur der Homopolymeren mit Hilfe der Fox-Gleichung berechnen.

$$\frac{1}{T_{g\ Mischung}} = W/T_{g1} + W2/T_{g2}$$

(Hans-Georg Elias, Polymere, Hüthig, S. 263, 1996).
W: Gewichtsbruch der Komponente
Tg: Glasübergangstemperatur der Komponente in Kelvin

Als Glasübergangstemperaturen wurden folgende Werte verwendet:

| | K |
|---|---|
| Polybutylacrylat: | 219 |
| Polyethylacrylat : | 249 |
| Polymethylmethacrylat | 378 |
| Polystyrol | 382 |

Die Werte für die Glastemperaturen der Homopolymeren sind aus dem Polymer Handbook, 3. Auflage, 1989, entnommen.

Die Gewichtsverhältnisse des Kerns und der Schalen betragen zwischen 15 - 35 Gew.-% an Kernmaterial, 5 - 30 Gew.-% an Material der Schale 1 und 10 - 40 Gew.-% an Material der Schale 1, wobei sich die Verhältnisse zu 100 Gew.-% ergänzen.

Allgemeine Herstellungsvorschrift der Kern/Schale1/Schale2-Teilchen:

1.) Saatlatex

Der Saatlatex wird über eine Emulsionspolymerisation hergestellt und hat die Monomerzusammensetzung 98 Gew.-% Ethylacrylat und 2 Gew.-% Allylmethacrylat. Diese im Durchmesser ca. 20 nm großen Partikel liegen zu ca. 10 Gew.-% in Wasser vor.

2.) Herstellung der Schlagzähmodifier

Bei 40 - 60°C wird im Kessel unter Rühren Wasser vorgelegt, der Saatlatex vorgelegt und der Zulauf der Emulsion 1 gestartet (Dauer des Zulaufs: 0,5 - 2 Stunden).
Nach Zulaufende wird 0,25 - 1,0 Stunde gewartet und dann der Zulauf von Emulsion 2 gestartet. Dauer des Zulaufs: 1,0 - 2,0 Stunden. Nach Zulaufende wird 0,25 - 1,0 Stunde gewartet und danach der Zulauf von Emulsion 3 gestartet. Dauer des Zulaufs: 1,0 - 2,0 Stunden.

Emulsion 1 enthält die Monomerenmischung, die den Kern bilden.

Emulsion 2 enthält die Monomerenmischung, die S1 bilden.

Emulsion 3 enthält die Monomerenmischung, die S2 bilden

Als Emulgator werden die im Stand der Technik üblichen Emulgatoren verwendet, wie beispielsweise in EP 828 772 beschrieben.

Zur Separation des Schlagzähmodifiers wird die Dispersion über 2 d bei -20°C eingefroren, danach wieder aufgetaut und die koagulierte Dispersion über ein Filtergewebe abgetrennt. Die Trocknung des Feststoffes erfolgt bei 50°C im Trockenschrank (Dauer: ca. 3 d)

Abmischung der Formmassen

Eine Standardformmasse auf PMMA-Basis, PLEXIGLAS® 7 N wird mit 39,3 Gew.-% des jeweiligen Schlagzähmodifiers (bezogen auf das Gesamtsystem) mittels Extruder abgemischt.

Prüfung der Formmassen

Aus den abgemischten Formmassen wurden Prüfkörper hergestellt. Die Formmassen bzw. die entsprechenden Prüfkörper wurden nach folgenden Methoden geprüft:

Viskosität $\eta_s$ (220°C/5MPa):
Bestimmung der Schmelzviskosität, Prüfnorm: DIN 54811: 1984

Strangaufweitung B:

Bestimmung der Strangaufweitung, Prüfnorm: DIN 54811: 1984

Mini-Vicat (16h/80°C):

Bestimmung der Vicat-Erweichungstemperatur mit der Mini-Vicat-Anlage, Prüfnorm DIN ISO 306: Aug. 1994

KSZ (Charpy 179/leU):

Bestimmung der Charpy-Kerbschlagzähigkeit, Prüfnorm: ISO 179: 1993

E-Modul

Bestimmung des E-Moduls, Prüfnorm: ISO 527-2

Transmission (D 65/10°)

Messung von Transmission bei D65 und 10°, Prüfnorm: DIN 5033/5036

Haze

Haze-Messung am Hazemeter BYK Gardner Hazegard-plus,
**[0044]** Prüfnorm: ASTM D 1003: 1997
(Die Ergebnisse der Prüfungen an den Abmischungen sind in Anlage 2 zu sehen).

Vorteile der erfindungsgemäßen Formmassen

- Bei vergleichbarem Gehalt an Schlagzähmodifier liegt die Kerbschlagzähigkeit nach Charpy der einzelnen Formmassen sowohl bei 23°C (7,5 - 10,9 kJ/$m^2$ bei Abmischungen A - H gegenüber 5,2 bzw. 6,0 kJ/$m^2$ bei Vergleich A bzw. B) als auch bei -10°C (3,2 - 4,8 kJ/$m^2$ bei Abmischungen A - H gegenüber 2,0 bzw. 2,9 kJ/$m^2$ bei Vergleich A bzw. B) deutlich höher (besser). Gleichzeitig bleiben Schmelzviskosität, E-Modul bzw. Vicat-Erweichungstemperatur bei allen verglichenen Formmassen auf einem vergleichbaren Niveau (Differenz ca. 5 % des Wertes).

- Durch den Einbau von Styrol im Kern (Abmischungen F, G und H) konnte der Brechungsindex angepaßt werden, so daß der Haze sowohl bei 23°C als auch bei 40°C annähernd dem Wert des Vergleichs B entspricht.

- Würde man die Einsatzkonzentration der neuen Schlagzähmodifier in der Matrix erniedrigen, würde mit den Vergleichsabmischungen vergleichbare KSZ-Werte erhalten werden. Gleichzeitig würden E-Modul, Vicat-Erweichungstemperatur und Strangaufweitung erhöht und die Schmelzviskosität erniedrigt und somit ein besseres Verarbeitungsverhalten der Formmassen erreicht werden.

Die erfindungsgemäßen Schlagzähmodifizierungsmittel können auch zur Herstellung von transparenten Formmassen verwendet werden. Unter transparenten Formmassen werden Formmassen verstanden, die einen Haze (bei 23°C) von weniger als 4 haben.

Anlage 1: Zusammensetzung der einzelnen Beispiele

| | Einheit | V.-Bsp. 1 | V.-Bsp. 1 | Bsp. 1 | Bsp. 2 | Bsp.3 | Bsp. 4 | Bsp. 5 | Bsp. 6 | Bsp. 7 | Bsp. 8 |
|---|---|---|---|---|---|---|---|---|---|---|---|
| Kern (K) | | | | | | | | | | | |
| Methylmethacrylat | Gew.-% | 99,7 | 95,70 | 92,7 | 89,7 | 84,7 | 79,7 | 69,7 | 84,7 | 83,7 | 82,7 |
| Ethylacrylat | Gew.-% | | 4,00 | 7 | 10 | 15 | 20 | 30 | 14 | 14 | 14 |
| Allylmethacrylat | Gew.-% | 0,3 | 0,30 | 0,3 | 0,3 | 0,3 | 0,3 | 0,3 | 0,3 | 0,3 | 0,3 |
| Styrol | Gew.-% | | 0 | | | | | | 1 | 2 | 3 |
| Anteil K an K/S1/S2-Modifier | Gew.-% | 23 | 23 | 23 | 23 | 23 | 23 | 23 | 23 | 23 | 23 |
| Schale 1 (S1) | Gew.-% | | | | | | | | | | |
| Butylacrylat | Gew.-% | 81,7 | 81,7 | 81,7 | 81,7 | 81,7 | 81,7 | 81,7 | 81,7 | 81,7 | 81,7 |
| Styrol | Gew.-% | 17,0 | 17,0 | 17,0 | 17,0 | 17,0 | 17,0 | 17,0 | 17,0 | 17,0 | 17,0 |
| Allylmethacrylat | Gew.-% | 1,3 | 1,3 | 1,3 | 1,3 | 1,3 | 1,3 | 1,3 | 1,3 | 1,3 | 1,3 |
| Anteil S1 an K/S/S-Modifier | Gew.-% | 47 | 47 | 47 | 47 | 47 | 47 | 47 | 47 | 47 | 47 |
| Schale 2 (S2) | Gew.-% | | | | | | | | | | |
| Methylmethacrylat | Gew.-% | 96,0 | 96,0 | 96,0 | 96,0 | 96,0 | 96,0 | 96,0 | 96,0 | 96,0 | 96,0 |
| Ethylacrylat | Gew.-% | 4,0 | 4,0 | 4,0 | 4,0 | 4,0 | 4,0 | 4,0 | 4,0 | 4,0 | 4,0 |
| Anteil S1 an K/S/S-Modifier | Gew.-% | 30 | 30 | 30 | 30 | 30 | 30 | 30 | 30 | 30 | 30 |
| Radius des Modifier* | nm | 165 | 174 | 157 | 152 | 178 | 154 | 168 | 169 | 152 | 168 |

*Radien gemessen mit Teilchengrößenbestimmungsgerät Typ Coulter N4

Anlage 2: Prüfergebnisse der Abmischungen der Schlagzähmodifier in Formmassen

| Abmischung | Einheit | Vergl. A | Vergl. B | A | B | C | D | E | F | G | H |
|---|---|---|---|---|---|---|---|---|---|---|---|
| Modifier (s. Anlage 1) | | V-bsp.1 | V-bsp. 2 | Bsp. 1 | Bsp. 2 | Bsp. 3 | Bsp. 4 | Bsp. 5 | Bsp. 6 | Bsp. 7 | Bsp. 8 |
| Gehalt an Modifier in PLEXIGLAS® 7N | % | 39,3 | 39,3 | 39,3 | 39,3 | 39,3 | 39,3 | 39,3 | 39,3 | 39,3 | 39,3 |
| Eigenschaft | | | | | | | | | | | |
| Viskosität $\eta_s$ (220°C/5MPa) | Pas | 2120 | 2780 | 2890 | 2710 | 2800 | 2690 | | 3030 | 2680 | 2770 |
| Strangaufweitung B | % | 21,4 | 11,0 | 8,5 | 9,3 | 8,0 | 8,2 | | 9,3 | 12,5 | 11,8 |
| Mini-Vicat(16h/80°C) | °C | 99,8 | 95,5 | 94,4 | 94,4 | 93,2 | 93,4 | | 95,5 | 94,1 | 93,3 |
| KSZ(Charpy 179/1eU) 23°C | $kJ/m^2$ | 5,2 | 6,0 | 7,5 | 10,5 | 8,6 | 10,9 | 11 | 7,9 | 8,1 | 9,1 |
| 10°C | $kJ/m^2$ | 2,0 | 2,9 | 3,5 | | 4,7 | | | 3,2 | 3,3 | 4,8 |
| E-Modul | MPa | 2180 | 1805 | 1729 | 1740 | 1688 | 1766 | 1797 | 1814 | 1777 | 1759 |
| Transmission (D 65/10°) | % | 89,1 | 88,7 | 89,6 | 87,8 | 88,4 | 86,9 | 85,0 | 87,0 | 88,6 | 87,24 |
| Hazea 23°C | % | 1,2 | 1,3 | 1,6 | 1,4 | 2,9 | 2,4 | 3,97 | 1,4 | 1,5 | 1,1 |
| 40 °C | % | 5,43 | 5,39 | 5,33 | 5,57 | 8,77 | 7,86 | | 5,47 | 5,23 | 5,52 |

**Patentansprüche**

1. Schlagzähmodifizierungsmittel, enthaltend ein mehrstufiges Emulsionspolymerisat, aufgebaut aus

   i) einem Kern (K), aufgebaut aus folgenden Monomerkomponenten:

      a) 53 - 92,9 Gew.-%C1 - C8-Alkylmethacrylats
      b) 7 - 35 Gew.-% eines C1 - C8-Alkylacrylats
      c) 0,1 - 2 Gew.-% eines Vernetzers oder einer Vernetzermischung
      und
      d) 0 - 8 Gew.-% an Styrolderivaten,

   ii) einer ersten Schale, (S1), aufgebaut aus folgenden Monomerkomponenten:

      a) 75 - 99,9 Gew.-% eines C1 - C8-Alkylacrylats
      b) 0 - 25 Gew.-% an Styrolderivaten
      und
      c) 0,1 -2 Gew.% eines Vernetzers oder einer Vernetzermischung,

   iii) einer zweiten Schale (S2), aufgebaut aus folgenden Monomerkomponenten:

      a) 80 - 100 Gew.-% eines C1 - C8-Alkylmethacrylats
      und
      b) 0 - 20 Gew.-% eines C1 - C8-Alkylacrylats
      0 - 5 Gew.-% eines Reglers oder einer Reglermischung

2. Schlagzähmodifizierungsmittel gemäß Anspruch 1,
   **dadurch gekennzeichnet, dass**
   mindestens 1 - 5 Gew.-% an Styrolderivaten im Kern (K) verwendet werden.

3. Schlagzähmodifizierungsmittel, gemäß Anspruch 1,
   **dadurch gekennzeichnet, dass**
   als C1 - C8 -Alkylacrylat im Kern (K) mindestens 5 - 30 Gew.-% Ethylacrylat verwendet werden.

4. Schlagzähmodifizierungsmittel gemäß Anspruch 1 oder 3
   **dadurch gekennzeichnet, dass**
   als C1 - C8 -Alkylacrylat im Kern (K) mindestens 5 - 30 Gew.-% Butylacrylat verwendet werden.

5. Schlagzähmodifizierungsmittel gemäß Anspruch 1,
   **dadurch gekennzeichnet, dass**
   bei der Polymerisation von S2 0,1 bis 1 Gew.-% eines Reglers oder einer Reglerkombination bezogen auf die Summe aus Monomeren und Regler in S2 eingesetzt werden.

6. Formmasse, bestehend aus 3 - 80 Gew.-% des Schlagzähmodifizierungsmittels gemäß einem oder mehrerer vorstehender Ansprüche und 97 - 20 Gew.-% einer thermoplastischen Formmasse auf der Basis von Methylmethacrylat.

7. Formmasse nach Anspruch 6, die **gekennzeichnet ist durch** einen Transmissionsgrad D65/10° von größer 70 % und kleiner als 92%.

8. Formmasse nach Anspruch 6, die **gekennzeichnet ist durch** einen Transmissionsgrad D65/10° von größer als 80 % und kleiner als 92%.

9. Formmasse nach Anspruch 6, die **gekennzeichnet ist durch** einen Transmissionsgrad D65/10° von größer als 87 % und kleiner als 92%.

10. Verwendung der Formmasse gemäß einem oder mehrerer der Ansprüche 6 bis 9 zur Herstellung von Formkörpern.

11. Schlagzähmodifizierungsmittel gemäß Anspruch 1, **dadurch gekennzeichnet, dass** die Glasübergangstemperatur

des Polymers aus den Monomeren in Kern K unter Ausschluss des Vernetzers oder der Vernetzermischung, berechnet nach der Fox-Gleichung, zwischen 30 und 105 °C liegt.

**12.** Schlagzähmodifizierungsmittel gemäß Anspruch 1, **dadurch gekennzeichnet, daß** die Gewichtsverhältnisse des Kerns (K), der ersten Schale (S1) und der zweiten Schale (2)
15 - 35 Gew.-% an Kern
30 - 55 Gew.-% an Schale 1
10 - 40 Gew.-% an Schale 2
betragen.

## Claims

**1.** Impact modifier, comprising a multistage emulsion polymer, built up from

i) a core (C), built up from the following monomeric components:

a) from 53 to 92.9% by weight of C1-C8-alkyl methacrylate
b) from 7 to 35% by weight of a C1-C8-alkyl acrylate
c) from 0.1 to 2% by weight of a crosslinker or of a crosslinker mixture
and
d) from 0 to 8% by weight of styrene derivatives,

ii) a first shell, (S1), built up from the following monomeric components:

a) from 75 to 99.9% by weight of a C1-C8-alkyl acrylate
b) from 0 to 25% by weight of styrene derivatives
and
c) from 0.1 to 2% by weight of a crosslinker or of a crosslinker mixture,

iii) a second shell (S2), built up from the following monomeric components:

a) from 80 to 100% by weight of a C1-C8-alkyl methacrylate
and
b) from 0 to 20% by weight of a C1-C8-alkyl acrylate from 0 to 5% by weight of a regulator or of a regulator mixture

**2.** Impact modifier according to Claim 1,
**characterized in that**
at least from 1 to 5% by weight of styrene derivatives are used in the core (C).

**3.** Impact modifier according to Claim 1,
**characterized in that**
as C1-C8-alkyl acrylate in the core (C), use is made of at least from 5 to 30% by weight of ethyl acrylate.

**4.** Impact modifier according to Claim 1 or 3,
**characterized in that**
as C1-C8-alkyl acrylate in the core (C), use is made of at least from 5 to 30% by weight of butyl acrylate.

**5.** Impact modifier according to Claim 1,
**characterized in that**
in the polymerization of S2, use is made of from 0.1 to 1% by weight of a regulator or of a regulator combination, based on the entirety of monomers and regulator in S2.

**6.** Moulding composition composed of from 3 to 80% by weight of the impact modifier according to one or more preceding claims and from 97 to 20% by weight of a thermoplastic moulding composition based on methyl methacrylate.

7. Moulding composition according to Claim 6, **characterized by** a D65/10° transmittance greater than 70% and less than 92%.

8. Moulding composition according to Claim 6, **characterized by** a D65/10° transmittance greater than 80% and less than 92%.

9. Moulding composition according to Claim 6, **characterized by** a D65/10° transmittance greater than 87% and less than 92%.

10. Use of the moulding composition according to one or more of Claims 6 to 9 for producing mouldings.

11. Impact modifier according to Claim 1, **characterized in that** the glass transition temperature of the polymer made from the monomers in core C excluding the crosslinker or the crosslinker mixture is from 30 to 105°C, as calculated by the Fox equation.

12. Impact modifier according to Claim 1, **characterized in that** the ratios by weight of the core (C), the first shell (S1) and the second shell (2) are
from 15 to 35% by weight of core
from 30 to 55% by weight of shell 1
from 10 to 40% by weight of shell 2.

**Revendications**

1. Agent modificateur antichoc, contenant un produit de polymérisation en émulsion en plusieurs stades, constitué

   i) d'un noyau (K) formé à partir des composants monomères suivants :

      a) 53-92,9 % en poids de méthacrylate d'alkyle en $C_1$-$C_8$
      b) 7-35 % en poids d'un acrylate d'alkyle en $C_1$-$C_8$
      c) 0,1-2 % en poids d'un agent de réticulation ou d'un mélange d'agents de réticulation
      et
      d) 0-8 % en poids de dérivés de styrène,

   ii) d'une première enveloppe (S1) formée à partir des composants monomères suivants :

      a) 75-99,9 % en poids d'un acrylate d'alkyle en $C_1$-$C_8$
      b) 0-25 % en poids de dérivés de styrène
      et
      c) 0,1-2 % en poids d'un agent de réticulation ou d'un mélange d'agents de réticulation,

   iii) d'une seconde enveloppe (S2) formée à partir des composants monomères suivants :

      a) 80-100 % en poids d'un méthacrylate d'alkyle en $C_1$-$C_8$
      b) 0-20 % en poids d'un acrylate d'alkyle en $C_1$-$C_8$
      0-5 % en poids d'un régulateur ou d'un mélange de régulateurs.

2. Agent modificateur antichoc selon la revendication 1, **caractérisé en ce qu'**au moins 1-5 % en poids de dérivés de styrène sont utilisés dans le noyau (K).

3. Agent modificateur antichoc selon la revendication 1, **caractérisé en ce qu'**on utilise en tant qu'acrylate d'alkyle en $C_1$-$C_8$ dans le noyau (K) au moins 5-30 % en poids d'acrylate d'éthyle.

4. Agent modificateur antichoc selon la revendication 1 ou 3, **caractérisé en ce qu'**on utilise en tant qu'acrylate d'alkyle en $C_1$-$C_8$ dans le noyau (K) au moins 5-30 % en poids d'acrylate de butyle.

5. Agent modificateur antichoc selon la revendication 1, **caractérisé en ce qu'**on utilise dans la polymérisation de S2 0,1 à 1 % en poids d'un régulateur ou d'une association de régulateurs par rapport à la somme des monomères et

du(des) régulateur(s) dans S2.

6. Matière à mouler, constituée de 3-80 % en poids de l'agent modificateur antichoc selon une ou plusieurs des revendications précédentes et de 97-20 % en poids d'une matière à mouler thermoplastique à base de méthacrylate de méthyle.

7. Matière à mouler selon la revendication 6, qui est **caractérisée par** un degré de transmission D65/10° de plus de 70 % et de moins de 92 %.

8. Matière à mouler selon la revendication 6, qui est **caractérisée par** un degré de transmission D65/10° de plus de 80 % et de moins de 92 %.

9. Matière à mouler selon la revendication 6, qui est **caractérisée par** un degré de transmission D65/10° de plus de 87 % et de moins de 92 %.

10. Utilisation de la matière à mouler selon une ou plusieurs des revendications 6 à 9, pour la fabrication de corps moulés.

11. Agent modificateur antichoc selon la revendication 1, **caractérisé en ce que** la température de transition vitreuse du polymère à base des monomères dans le noyau K, à l'exclusion de l'agent de réticulation ou du mélange d'agents de réticulation, calculée selon l'équation de Fox, est comprise entre 30 et 105 °C.

12. Agent modificateur antichoc selon la revendication 1, **caractérisé en ce que** les rapports pondéraux du noyau (K), de la première enveloppe (S1) et de la seconde enveloppe (2) sont de
15-35 % en poids de noyau
30-55 % en poids d'enveloppe 1
10-40 % en poids d'enveloppe 2.